(19) **Europäisches Patentamt / European Patent Office / Office européen des brevets**

(11) **EP 3 276 048 A1**

(12) **EUROPEAN PATENT APPLICATION**
published in accordance with Art. 153(4) EPC

(43) Date of publication:
**31.01.2018 Bulletin 2018/05**

(21) Application number: **16768398.6**

(22) Date of filing: **08.03.2016**

(51) Int Cl.:
*C25D 7/00* (2006.01)          *C25D 5/12* (2006.01)
*C25D 5/50* (2006.01)          *H01R 13/03* (2006.01)

(86) International application number:
**PCT/JP2016/057091**

(87) International publication number:
**WO 2016/152495 (29.09.2016 Gazette 2016/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.03.2015 JP 2015059759**

(71) Applicant: **Kabushiki Kaisha Kobe Seiko Sho (Kobe Steel, Ltd.)**
**Kobe-shi, Hyogo 651-8585 (JP)**

(72) Inventor: **NOMURA, Koya**
**Yamaguchi 752-0953 (JP)**

(74) Representative: **Müller-Boré & Partner**
**Patentanwälte PartG mbB**
**Friedenheimer Brücke 21**
**80639 München (DE)**

(54) **ELECTRICALLY CONDUCTIVE MATERIAL FOR CONNECTION COMPONENT**

(57)    An electrically conductive material for a connection component including a base material made of a copper alloy sheet strip, a Cu-Sn alloy coating layer and a reflow Sn coating layer, wherein the Cu-Sn alloy coating layer and the reflow Sn coating layer are arranged on a surface of the base material in this order from a side of the base material; parts of the Cu-Sn alloy coating layer are exposed on a surface; a coefficient of friction in each of a direction perpendicular to and a direction inclined by 45° to a rolling direction of the copper alloy base material is reduced, compared to that in the rolling direction of the copper alloy base material. The surface of the electrically conductive material for a connection component is subjected to a reflow treatment; an arithmetic mean roughness Ra in at least one direction is 0.15 $\mu$m or more; an arithmetic mean roughness Ra in all directions is 3.0 $\mu$m or less; a material-surface exposure area ratio of the Cu-Sn alloy coating layer is 3 to 75%; and an average material-surface exposure interval in at least one direction is 0.01 to 0.5 mm. In a Vickers hardness test, the base metal satisfies VT - VL $\geq$ 4, where VL is a Vickers hardness determined from a length DL of a diagonal parallel to the rolling direction of a dent left on a surface of the copper alloy base material after releasing a testing force, and VT is a Vickers hardness determined from a length DT of a diagonal perpendicular to the rolling direction of the dent.

*Fig.1*

## Description

Technical Field

The present invention relates to an electrically conductive material for a connection component that is used for fitting type terminals employed in automobiles or general consumer goods, the connection component can achieve reduction in a coefficient of friction and reduction in a fretting wear during insertion or removal between a male terminal and a female terminal.

Background Art

Patent Document 1 discloses an electrically conductive material for a connection component that is obtained by, if necessary after applying Ni plating, applying Cu plating and Sn plating onto a roughened surface of a base material, made of a copper alloy sheet or strip, followed by a reflow treatment. In the electrically conductive material for a connection component, a Cu-Sn alloy coating layer having a thickness of 0.2 to 3.0 $\mu$m and a Sn coating layer having a thickness of 0.2 to 5.0 $\mu$m are arranged in this order on the surface of the base material. On the surface of the electrically conductive material for a connection component, an arithmetic mean roughness Ra in at least one direction is 0.15 $\mu$m or more and an arithmetic mean roughness Ra in all directions is 3.0 $\mu$m or less. Parts of the Cu-Sn alloy coating layer are exposed on the outermost surface, and its exposure area ratio is 3 to 75%. An average material-surface exposure interval of the Cu-Sn alloy coating layer in at least one direction is 0.01 to 0.5 mm.

In a terminal manufactured by using the electrically conductive material for a connection component disclosed in Patent Document 1, the hard Cu-Sn alloy coating layer exposed on the surface (which exists at protrusions on the surface) receives a load. Thus, this terminal drastically reduces a coefficient of friction and improves a resistance to a fretting wear when fitting the terminals, as compared with a terminal manufactured by using a general reflow Sn plating material (which uses, as a base material, a copper alloy sheet or strip not roughened and has no exposure of a Cu-Sn alloy coating layer on its surface).

Patent Document 2 discloses an electrically conductive material for a connection component that basically has the same surface coating layer structure as the electrically conductive material for a connection component disclosed in Patent Document 1. In the electrically conductive material, a Cu-Sn alloy coating layer exposed on the surface includes a random microstructure distributed irregularly and a linear microstructure extended in parallel to a rolling direction of a base material. The electrically conductive material for a connection component includes 35 or more linear microstructures per 1 mm$^2$, each linear microstructure having a length of 50 $\mu$m or more and a width of 10 $\mu$m or less.

In the electrically conductive material for a connection component disclosed in Patent Document 2, the Cu-Sn alloy coating layer exposed on its surface includes the random microstructure and the linear microstructure, a coefficient of friction is further reduced, as compared with the electrically conductive material for a connection component disclosed in Patent Document 1. The linear microstructure is extended in parallel to the rolling direction of the base material, and thus a coefficient of friction in the direction perpendicular to the rolling direction of the base material is relatively lower than a coefficient of friction in the direction parallel to the rolling direction of the base material.

In the majority of terminals manufactured by punching out or by punching out and then bending the electrically conductive material for a connection component, an insertion direction of the terminal is set in the direction parallel to or perpendicular to the rolling direction of the base material. Meanwhile, Patent Document 3 proposes that an insertion direction of a terminal is inclined by 10 to 80° and preferably by 30 to 60° to the rolling direction of the base material.

Prior Art Document

Patent Document

Patent Document 1: JP 2006-183068 A
Patent Document 2: JP 2013-209680 A
Patent Document 3: JP 2010-75988 A

Summary of the Invention

Problems to be Solved by the Invention

It is an object of the present invention to improve the electrically conductive material for a connection component disclosed in Patent Document 1 so as to reduce a coefficient of friction in the direction perpendicular to a rolling direction of a base material and a coefficient of friction in the direction inclined by a predetermined angle to the rolling direction of the base material, as compared to a coefficient of friction in the rolling direction of the base material.

Means for Solving the Problems

In an electrically conductive material for a connection component according to the present invention includes: a base metal made of a copper alloy sheet strip; a Cu-Sn alloy coating layer having a Cu content of 20 to 70 atomic percent (at%) and an average thickness of 0.2 to 3.0 $\mu$m; and a reflow Sn coating layer having an average thickness of 0.2 to 5.0 $\mu$m; wherein the Cu-Sn alloy coating layer and the reflow Sn coating layer are arranged on a surface of the base material in this order from a side of the base material; an arithmetic mean roughness Ra in at least one direction is 0.15 $\mu$m or more and an arithmetic mean roughness Ra in all directions is 3.0 $\mu$m or less; parts of the Cu-Sn alloy coating layer are formed to be exposed on a surface of the reflow Sn coating layer; a material-surface exposure area ratio of the Cu-Sn alloy coating layer is 3 to 75%; an average material-surface exposure interval in at least one direction is 0.01 to 0.5 mm; and further, in a Vickers hardness test, the copper alloy base metal satisfies VT - VL $\geq$ 4, where VL is a Vickers hardness determined from a length of a diagonal parallel to the rolling direction of a dent left on the surface of the base material by the Vickers hardness test, and VT is a Vickers hardness determined from a length of a diagonal perpendicular to the rolling direction of the dent.

In the Vickers hardness test, a plane which is a plane parallel to the direction of application of a testing force and which includes one of ridge lines of an indenter with a square pyramid shape, is oriented in parallel to the rolling direction of the base material (one of ridge lines of the indenter is oriented in parallel to the rolling direction of the base material in the planer view), the testing force of 4.903 N (500 g) is applied to the surface of the base material with the indenter and then held for 10 seconds, thereafter, the testing force is released.

The two diagonals of the dent left on the surface of the base material by the Vickers hardness test are oriented parallel to and perpendicular to the rolling direction, respectively. Vickers hardness VL as used in the present invention is calculated to be $0.1891 \times (F/DL^2)$, and Vickers hardness VT as used therein is calculated to be $0.1891 \times (F/DT^2)$, where F (N) is the testing force in the Vickers hardness test, DL (mm) is the length of the diagonal parallel to the rolling direction of the dent, and DT (mm) is the length of the diagonal perpendicular to the rolling direction of the dent.

The electrically conductive material for a connection component have, for example, the following embodiments.

A thickness of the Cu-Sn alloy coating layer exposed on the surface of the base material is preferably 0.2 $\mu$m or more.

A Cu coating layer is further provided between the surface of the base material and the Cu-Sn alloy coating layer.

An underlayer made of any one of a Ni coating layer, a Co coating layer and a Fe coating layer is further formed between the surface of the base material and the Cu-Sn alloy coating layer, and an average thickness of the underlayer is 0.1 to 3.0 $\mu$m.

An underlayer made of any two of a Ni coating layer, a Co coating layer and a Fe coating layer is further formed between the surface of the base material and the Cu-Sn alloy coating layer, and an average total thickness of the underlayers is 0.1 to 3.0 $\mu$m.

A Cu coating layer is further provided between the underlayer and the Cu-Sn alloy coating layer.

On the surface of the base material, an arithmetic mean roughness Ra in at least one direction is 0.3 $\mu$m or more and an arithmetic mean roughness Ra in all directions is 4.0 $\mu$m or less.

On the surface of the base material, a mean spacing Sm of irregularities in at least one direction is 0.01 to 0.5 mm.

The reflow Sn coating layer, the Cu coating layer, the Ni coating layer, the Co coating layer and the Fe coating layer include a Sn alloy, a Cu alloy, a Ni alloy, a Co alloy and a Fe alloy, respectively, in addition to Sn, Cu, Ni, Co and Fe metals. Further, the Sn plating layer includes a Sn alloy in addition to Sn metal.

Effects of the Invention

First of all, the electrically conductive material for a connection component according to the present invention is one obtained by improving the electrically conductive materials for a connection component disclosed in Patent Documents 1 and 2, and thus has a low coefficient of friction and reduces an insertion force of the terminal, thereby the resistance to a fretting wear of the terminals is improved, like those disclosed in Patent Documents 1 and 2.

Further, in the electrically conductive material for a connection component according to the present invention, a difference in the Vickers hardness of the copper alloy base material satisfies VT - VL $\geq$ 4, and thus a coefficient of friction in the direction perpendicular to the rolling direction becomes smaller than that in the direction parallel to the rolling direction, and a coefficient of friction in the direction inclined by 45° to the rolling direction becomes much smaller. In the terminal manufactured by punching out or by punching out and then bending the electrically conductive material for a connection component according to the present invention, when the insertion direction of the terminal is set in the direction perpendicular to the rolling direction of the base material or in the direction inclined (typically 45°) to the rolling direction of the base material, the insertion force of the terminal can be further reduced, and the resistance to a fretting wear of the terminal can be improved, as compared with a case in which the insertion direction of the terminal is set in the rolling direction of the base material.

Brief Description of the Drawings

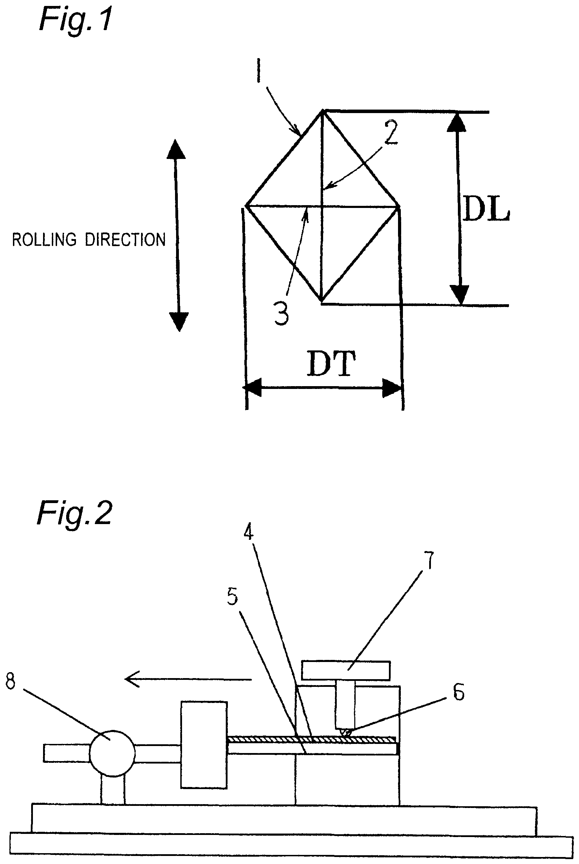

Fig. 1 shows a diagram for explaining a calculation method of Vickers hardnesses (VL, VT) in the present invention. Fig. 2 is a conceptual diagram of a friction coefficient measurement jig.

Mode for Carrying Out the Invention

[Difference in Vickers Hardness (VT - VL $\geq$ 4)]

First, a description will be given on the most characteristic feature of the electrically conductive material for a connection component according to the present invention, i.e., a difference in the Vickers hardness (VT - VL $\geq$ 4) of the copper alloy base material.

In the Vickers hardness test for determining the above-mentioned difference in the Vickers hardness, one of ridge lines of an indenter is oriented in parallel to the rolling direction of the base material in the planar view, the testing force of 4.903 N (500 g) is applied to the surface of the base material with the indenter and then held for 10 seconds, thereafter, the testing force is released. As shown in Fig. 1, a dent (indentation) 1 left on the base material surface by the Vickers hardness test has a diagonal 2 parallel to the rolling direction of the base material and a diagonal 3 perpendicular to the rolling direction. Vickers hardness VL as used in the present invention is calculated to be $0.1891 \times (F/DL^2)$, and Vickers hardness VT as used therein is calculated to be $0.1891 \times (F/DT^2)$, where F (N) is the testing force in the Vickers hardness test, DL (mm) is the length of the diagonal 2, and DT (mm) is the length of the diagonal 3.

The formula (VT - VL $\geq$ 4) about the difference in the Vickers hardness means that the Vickers hardness VT determined from the length DT of the diagonal 3 perpendicular to the rolling direction of the base material is larger by 4 or more than the Vickers hardness VL determined from the length DL of the diagonal 2 parallel to the rolling direction of the base material. In other words, when the indenter with the square pyramid shape is pushed into the surface of the base material in the Vickers hardness test, a deformation resistance in the direction perpendicular to the rolling direction of the base material is larger than the deformation resistance in the direction parallel to the rolling direction of the base material.

By setting the difference in the Vickers hardness of the copper alloy base material at 4 or more (VT - VL $\geq$ 4), in the electrically conductive material for a connection component, a coefficient of friction in the direction perpendicular to the rolling direction of the base material can be lower than that in the direction parallel to the rolling direction (exceeding 0.04 in Examples to be mentioned later). At the same time, a coefficient of friction in the direction inclined by 45° to the rolling direction of the base material can be further lower than that in the direction perpendicular to the rolling direction. Conversely, when the difference in the Vickers hardness is less than 4 (VT - VL < 4), the coefficient of friction in the direction perpendicular to the rolling direction of the base material and the coefficient of friction in the direction inclined by 45° to the rolling direction of the base material cannot be lowered as mentioned above. The difference in the Vickers hardness (VT - VL) is preferably 6 or more, and more preferably 8 or more.

In the electrically conductive material for a connection component, it is not clear why the coefficient of friction in each of the direction perpendicular to and the direction inclined by 45° to the rolling direction of the base material becomes low as mentioned above by setting the difference in the Vickers hardness of the copper alloy base material at 4 or more (VT - VL $\geq$ 4). The inventors have inferred that the difference in the Vickers hardness of the copper alloy base material of 4 or more, and the difference in the deformation resistance of the base material depending on its direction being large affect ease of the deformability (plastic flow caused by trenching when the terminal slides) of the reflow Sn coating layer after the reflow treatment as a result, the above-mentioned difference in the coefficient of friction depending on the direction occur.

A method for setting a difference in the Vickers hardness of the copper alloy base material at 4 or more (VT - VL $\geq$ 4) will be described below.

When the reflow Sn coating layer, the Cu-Sn alloy coating layer, the Ni coating layer, the underlayer and the like are disposed on the surface of the copper alloy base material, the Vickers hardnesses VT and VL of the copper alloy base material can be measured by removing the reflow Sn coating layer, the Cu-Sn alloy coating layer, the Ni coating layer, the underlayer and the like disposed on the surface of the base material through etching or the like to expose the surface of the copper alloy base material, and then performing the above-mentioned Vickers hardness test on the exposed surface of the copper alloy base material.

[Surface Coating Layer Structure]

The surface coating layer structure of Lhe electrically conductive material for a connection component according to the present invention will be described below. The electrically conductive material for a connection component according to the present invention basically has the same definitions as those mentioned in Patent Documents 1 and 2 in terms of the following respective features: a Cu content in the Cu-Sn alloy coating layer; an average thickness of the Cu-Sn alloy coating layer; an average thickness of a reflow Sn coating layer; an arithmetic mean roughness Ra of the material surface; a material-surface exposure area ratio of the Cu-Sn alloy coating layer; an exposure interval of the Cu-Sn alloy coating layer that are exposed on the material surface; an average thickness of the Cu coating layer; an average thickness of the Ni coating layer; an arithmetic mean roughness of the surface of the base material; and a mean spacing Sm of irregularities on the surface of the base material.

(1) Cu Content in Cu-Sn Alloy Coating Layer

The Cu-Sn alloy coating layer having a Cu content of 20 to 70 at% is made of an intermetallic compound that mainly includes a $Cu_6Sn_5$ phase. The $Cu_6Sn_5$ phase is very hard, compared to Sn or a Sn Alloy that forms a reflow Sn coating layer. When the $Cu_6Sn_5$ phase is partially exposed and formed on the outermost surface of the material, the deformation resistance due to plastic flow caused by trenching of the reflow Sn coating layer or the shearing resistance caused by shearing adhesion can be suppressed when the terminal is inserted or removed, and thus a coefficient of friction can be made extremely low. Further, in the present invention, the $Cu_6Sn_5$ phase partially protrudes at the surface of the reflow Sn coating layer, thereby the hard $Cu_6Sn_5$ phase receives contact pressure when the terminal is inserted or removed or when an electric contact portion is slid or slightly slid under vibration environment and the like, consequently, a contact area between the reflow Sn coating layers can be reduced even more. Thus, the coefficient of friction can be further reduced, and the wear and the oxidation of the reflow Sn coating layer due to the fretting are also reduced. Meanwhile, although a $Cu_3Sn$ phase is even harder than the $Cu_6Sn_5$ phase, the $Cu_3Sn$ phase has a large Cu content, compared to the $Cu_6Sn_5$ phase. Thus, when the $Cu_3Sn$ phase is partially exposed on the surface of the reflow Sn coating layer, the amount of oxides of Cu at the material surface increase over time or due to corrosion and the like. For this reason, the $Cu_3Sn$ phase is more likely to increase the contact resistance, and thus it becomes difficult to maintain the reliability of electric connection. Further, the $Cu_3Sn$ phase is brittle, compared to the $Cu_6Sn_5$ phase, and thus has a problem of inferior forming workability or the like. Therefore, the constituent component of the Cu-Sn alloy coating layer is limited to a Cu-Sn alloy that has a Cu content of 20 to 70 at%. The Cu-Sn alloy coating layer may partially include a $Cu_3Sn$ phase and may also contain other constituent elements of a plating underlayer, a base material and a Sn plating. However, if the Cu content in the Cu-Sn alloy coating layer is less than 20 at%, the adhesion force increase, thereby it becomes difficult to reduce a coefficient of friction, and further the resistance to a fretting wear is reduced. Meanwhile, if the Cu content exceeds 70 at%, then it becomes difficult to maintain the reliability of electric connection over time or due to corrosion and the like, and further the forming workability and the like is deteriorated. Therefore, the Cu content in the Cu-Sn alloy coating layer is set at 20 to 70 at%. 45 to 65 at% is more preferable.

(2) Average Thickness of Cu-Sn Alloy Coating Layer

In the present invention, the average thickness of the Cu-Sn alloy coating layer is defined as a value obtained by dividing an area density (unit: $g/mm^2$) of Sn contained in the Cu-Sn alloy coating layer by a density (unit: $g/mm^3$) of Sn. A measurement method for the average thickness of the Cu-Sn alloy coating layer, described in Examples below, is in conformity with this definition. If an average thickness of the Cu-Sn alloy coating layer is less than 0.2 $\mu$m, particularly, when the Cu-Sn alloy coating layer is partially exposed and formed on the material surface, like the present invention, the amount of oxides of Cu at the material surface due to thermal diffusion such as high-temperature oxidation becomes large. Consequently, the contact resistance tends to increase, and then it becomes difficult to maintain the reliability of electric connection. Meanwhile, if the average thickness of the Cu-Sn alloy coating layer exceeds 3.0 $\mu$m, this state is disadvantageous in terms of economy and also deteriorate the productivity, in addition, since the hard layer is formed thickly, the forming workability and the like would become deteriorated. Therefore, the average thickness of the Cu-Sn alloy coating layer is set at 0.2 to 3.0 $\mu$m. 0.3 to 1.0 $\mu$m is more preferable.

(3) Average Thickness of Reflow Sn Coating Layer

In the present invention, the average thickness of the reflow Sn coating layer is defined as a value obtained by dividing an area density (unit: $g/mm^2$) of Sn contained in the reflow Sn coating layer by a density (unit: $g/mm^3$) of Sn. A

measurement method for the average thickness of the reflow Sn coating layer, described in Examples below, is in conformity with this definition. If the average thickness of the reflow Sn coating layer is less than 0.2 $\mu$m, since the amount of Cu diffused to the surface of the reflow Sn coating layer due to the thermal diffusion becomes large, the amount of oxides of Cu at the surface of the reflow Sn coating layer becomes large, and then the contact resistance tends to increase. Furthermore, since the corrosion resistance becomes deteriorated, it becomes difficult to maintain the reliability of electric connection. Meanwhile, if the average thickness of the reflow Sn coating layer exceeds 5. 0 $\mu$m, this state is disadvantageous in terms of economy and deteriorates the productivity. Therefore, the average thickness of the reflow Sn coating layer is set at 0.2 to 5.0 $\mu$m. 0.5 to 3.0 $\mu$m is more preferable.

(4) Arithmetic Mean Roughness Ra of Material Surface

In all directions on the surface of the electrically conductive material for a connection component according to the present invention, if an arithmetic mean roughness Ra is less than 0.15 $\mu$m, height of protruded portions of the Cu-Sn alloy coating layer from the material surface is entirely low, and during sliding or fretting of the electric contact, the rate of contact pressure received by hard $Cu_6Sn_5$ phase becomes smaller. Thus, it becomes difficult to reduce the amount of wear of the reflow Sn coating layer, particularly, due to the fretting. Meanwhile, in any direction on the surface of the electrically conductive material for a connection component according to the present invention, if an arithmetic mean roughness Ra exceeds 3.0 $\mu$m, the amount of oxides of Cu at the material surface due to the thermal diffusion such as high-temperature oxidation becomes large, the contact resistance tends to increase, and then it becomes difficult to maintain the reliability of electric connection. Therefore, regarding the surface roughness of the material surface, the arithmetic mean roughness Ra in at least one direction is set at 0.15 $\mu$m or more, and the arithmetic mean roughness Ra in all directions is set at 3.0 $\mu$m or less. 0.2 to 2.0 $\mu$m is more preferable. In the present invention, the arithmetic mean roughness Ra in the direction perpendicular to the rolling direction of the copper alloy base material is the largest. Thus, if the arithmetic mean roughness Ra in the direction perpendicular to the rolling direction of the copper alloy base material is 3.0 $\mu$m or less, it can be regarded that the arithmetic mean roughness Ra in all directions is 3.0 $\mu$m or less.

(5) Material-Surface Exposure Area Ratio of Cu-Sn Alloy Coating Layer

In the present invention, the material-surface exposure area ratio of the Cu-Sn alloy coating layer is calculated as a value obtained by multiplying a surface area of the Cu-Sn alloy coating layer exposed per unit surface area of the material by 100. If the material-surface exposure area ratio of the Cu-Sn alloy coating layer is less than 3%, since the amount of adhesion between the reflow Sn coating layers increases and further the contact area increases when the terminal is inserted or removed, it is difficult to reduce a coefficient of friction and then the resistance to a fretting wear is reduced. Meanwhile, if the material-surface exposure area ratio exceeds 75%, the amount of oxides of Cu at the material surface and the like become large over time or due to corrosion and the like, the contact resistance tends to increase, and then it becomes difficult to maintain the reliability of electric connection. Therefore, the material-surface exposure area ratio of the Cu-Sn alloy coating layer is set at 3 to 75%. 10 to 50% is more preferable.

(6) Average Material-Surface Exposure Interval of Cu-Sn Alloy Coating Layer

In the present invention, the average material-surface exposure interval of the Cu-Sn alloy coating layer is defined as a value obtained by adding an average width (the length along the straight line) of the Cu-Sn alloy coating layer that crosses a straight line drawn on the material surface to an average width of the reflow Sn coating layer. If the average material-surface exposure interval of Cu-Sn alloy coating layer is less than 0.01 mm, the amount of oxides of Cu at the material surface due to the thermal diffusion such as high-temperature oxidation becomes large, the contact resistance tends to increase, and then it becomes difficult to maintain the reliability of electric connection. Meanwhile, if the average material-surface exposure interval exceeds 0.5 mm, particularly in the use of a small-sized terminal, it is difficult to obtain a low coefficient of friction in some cases. In general, in the small-sized terminal, since the contact area of electric contacts (insertion and removal portion) such as an indent or a rib is decreased, a contact probability only between the reflow Sn coating layers increases when the terminal is inserted or removed. In this way, the amount of adhesion increases, thereby it becomes difficult to obtain a low coefficient of friction. Therefore, the average material-surface exposure interval of the Cu-Sn alloy coating layer is preferably set at 0.01 to 0.5 mm in at least one direction (particularly, the direction perpendicular to the rolling direction). The average material-surface exposure interval of the Cu-Sn alloy coating layer is more preferably set at 0.01 to 0.5 mm in all directions. Thus, the contact probability only between the reflow Sn coating layers when the terminal is inserted or removed is reduced. 0.05 to 0.3 mm is further preferable in all directions.

(7) Thickness of Cu-Sn Alloy Coating Layer Exposed on Surface of Reflow Sn Coating Layer

When parts of the Cu-Sn alloy coating layer are exposed on the surface of the reflow Sn coating layer, like the present invention, the thickness of the Cu-Sn alloy coating layer exposed on the surface of the reflow Sn coating layer is occasionally extremely thin, depending on the manufacturing conditions, compared to the above-mentioned average thickness of the Cu-Sn alloy coating layer. In the present invention, the thickness of the Cu-Sn alloy coating layer exposed on the surface of the reflow Sn coating layer is defined as a value measured by the cross-sectionai observation (which is different from the above-mentioned measurement method of the average thickness of the Cu-Sn alloy coating layer.). If the thickness of the Cu-Sn alloy coating layer exposed on the surface of the reflow Sn coating layer is less than 0.2 $\mu$m, particularly, when the Cu-Sn alloy coating layer is partially exposed and formed on the material surface, like the present invention, the amount of oxides of Cu at the material surface due to thermal diffusion such as high-temperature oxidation becomes large, and the corrosion resistance is also reduced. Because of this, the contact resistance tends to increase, and then it becomes difficult to maintain the reliability of electric connection. Therefore, the thickness of the Cu-Sn alloy coating layer exposed on the surface of the reflow Sn coating layer is preferably 0.2 $\mu$m or more. 0.3 $\mu$m or more is more preferable.

(8) Average Thickness of Cu Coating Layer

When a Zn-containing Cu alloy such as brass or red brass is used as the base material, a Cu coating layer may be formed between the base material and the Cu-Sn alloy coating layer. The Cu coating layer is a residue of a Cu plating layer left after the reflow treatment. It is widely known that the Cu coating layer is useful in suppressing the diffusion of Zn or other constituent elements of the base material to the material surface and the solderability and the like are improved. If the Cu coating layer is extremely thick, this state degrades the forming workability and the like and is also inferior in terms of economy, and thus, the thickness of the Cu coating layer is preferably 3.0 $\mu$m or less.

A small amount of constituent elements contained in the base material may be mixed into the Cu coating layer. When the Cu coating layer is made of a Cu alloy, examples of constituent components other than Cn of the Cn alloy contain Sn, Zn and the like. When the other component is Sn, less than 50% by mass is preferable, whereas with regard to other elements, less than 5% by mass is preferable.

(9) Average Thickness of Underlayer (Ni Coating Layer, etc.)

A Ni coating layer may be formed between the base material and the Cu-Sn alloy coating layer (without any Cu coating layer) or between the base material and the Cu coating layer. It is known that the Ni coating layer suppresses the diffusion of Cu and the constituent elements of the base material element to the material surface, thereby an increase in contact resistance is suppressed even after the use under a high temperature for a long time, further, the Ni coating layer suppresses the growth of the Cu-Sn alloy coating layer, thereby the waste of the reflow Sn coating layer is prevented and the corrosion resistance to sulfurous acid gas is improved. However, if the average thickness of the Ni coating layer is less than 0.1 $\mu$m, pit defects in the Ni coating layer are increased or the like, and thus the above-mentioned effects cannot be sufficiently exhibited. Further, the diffusion of the Ni coating layer itself to the material surface is suppressed by the Cu-Sn alloy coating layer and the Cu coating layer. For this reason, a material for a connection component in which the Ni coating layer is formed is suitable, especially, for a connection component that needs the heat resistance. If the Ni coating layer is extremely thick, this state degrades the forming workability and the like and is also inferior in terms of economy, and thus, the thickness of the Ni coating layer is preferably 3.0 $\mu$m or less. Therefore, the average thickness of the Ni coating layer is preferably 0.1 to 3.0 $\mu$m. More preferably, the lower limit of the average thickness of the Ni coating layer is 0.2 $\mu$m, while the upper limit thereof is 2.0 $\mu$m.

A small amount of constituent elements and the like contained in the base material may be mixed into the Ni coating layer. When the Ni coating layer is made of a Ni alloy, examples of constituent components other than Ni of the Ni alloy contain Cu, P, and Co. With regardto Cu, 40% by mass or less is preferable, and with regard to P and Co, 10% by mass or less is preferable.

Instead of the Ni coating layer, a Co coating layer or a Fe coating layer can be used as the underlayer. The Co coating layer is made of Co or a Co alloy, and the Fe coating layer is made of Fe or a Fe alloy. The Co coating layer or Fe coating layer suppresses the diffusion of the constituent elements of the base material to the material surface, like the Ni coating layer. Thus, the Co coating layer and Fe coating layer suppresses the growth of the Cu-Sn alloy layer, thereby the waste of the Sn layer is prevented and an increase in contact resistance is suppressed even after the use under a high temperature for a long time further, the Co coating layer and Fe coating layer also serve to attain the excellent solder wettability. However, if the average thickness of the Co coating layer or Fe coating layer is less than 0.1 $\mu$m, pit defects in the Co coating layer or Fe coating layer are increased or the like, thus the above-mentioned effects cannot be sufficiently exhibited, like the Ni coating layer. If the average thickness of the Co coating layer or Fe coating layer exceeds 3.0 μm, the above-mentioned effects are saturated, like the Ni coating layer, furthermore, the forming workability for terminals is degraded, for example, cracking occurs by a bending process or the like, which leads to deterioration in the productivity and inferiority in the economy. Thus, when the Co coating layer or Fe coating layer is used as the underlayer instead of the Ni coating layer, the average thickness of the Co coating layer or Fe coating layer is set at 0.1 to 3.0 μm. Preferably, the lower limit of the average thickness of the Co coating layer or Fe coating layer is 0.2 μm, while the upper limit thereof is 2.0 μm.

Alternatively, any two of the Ni coating layer, the Co coating layer and the Fe coating layer can be used as the underlayer. In this case, the Co coating layer or Fe coating layer is preferably formed between the base material surface and the Ni coating layer, or between the Ni coating layer and the Cu-Sn alloy layer. The total of the average thickness of the two underlayers (any two of the Ni coating layer, the Co coating layer and the Fe coating layer) is set at 0.1 to 3.0 μm for the same reason as in the case that only one underlayer is formed. Preferably, the lower limit of the total of the average thickness is 0.2 μm, while the upper limit thereof is 2.0 μm.

[Manufacturing Method of Electrically Conductive Material for Connection Component]

The electrically conductive material for a connection component according to the present invention can be basically manufactured by the manufacturing methods disclosed in Patent Documents 1 and 2.

First of all, the surface of the base material (copper alloy base material) made of the copper alloy sheet or strip is roughened to obtain the surface roughness with an arithmetic mean roughness Ra in at least one direction of 0.3 μm or more and an arithmetic mean roughness Ra in all directions of 4.0 μm or less. On the surface of the base material, the surface roughness with a mean spacing Sm of irregularities in at least one direction of 0.01 to 0.5 mm is preferable.

To roughen the surface of the base material, a work roll roughened by shot blast, mechanical polish (buffing, brush polishing, etc.,) or the like is used in a final (finish) cold rolling. The surface of the base material can also be roughened by mechanical polish (buffing, brush polishing, etc.,) before or after the finish cold rolling using the roughened work roll.

By the finish cold rolling using the roughened work roll, the surface of the base material can be roughened, and by selecting appropriate rolling conditions, a difference in the Vickers hardness of the base material can be 4 or more (VT - VL ≥ 4). For this purpose, it is effective to enlarge the roll diameter of the work roll, to decrease the viscosity of rolling lubricant, to decrease the rolling rate, and to enlarge a rolling reduction per pass. Further, it is also effective to restrict the surface roughness of the base material within the above-mentioned range, and to enlarge the surface roughness of a mill roll to an extent that does not cause excessive surface roughening or seizure on the surface.

It is not clear why a difference in the Vickers hardness of the surface of the base material after the finish cold rolling can be 4 or more (VT - VL ≥ 4) by performing the finish cold rolling through a combination of the above-mentioned rolling conditions. However, the inventors have inferred that by combining the above-mentioned rolling conditions, the friction force between the rolling roll and the copper alloy sheet or strip (base material) becomes large during the finish cold rolling, and that this contributes to an increase in the difference (VT - VL) in the Vickers hardness of the surface of the copper alloy base material after the finish cold rolling.

Subsequently, a Sn plating layer is formed, or a Cu plating layer and a Sn plating layer is formed in this order, on the roughened surface of the copper alloy base material, and then the reflow treatment is performed, whereby the Cu-Sn alloy coating layer and the reflow Sn coating layer are formed (i.e., arranged) in this order.

When only the Sn plating layer is formed on the surface of the base material, the Cu-Sn alloy coating layer is formed out of the base material and the Sn plating layer, meanwhile, when the Cu plating layer and the Sn plating layer is formed on the base material surface, the Cu-Sn alloy coating layer is formed out of the Cu plating layer and the Sn plating layer. When the Cu plating layer is formed, any one or two of a Ni plating layer, a Co plating layer and a Fe plating layer can also be formed as the underlayer between the base material and the Cu plating layer. The Cu plating layer left as the residue after the reflow treatment becomes the Cu coating layer.

If the arithmetic mean roughness Ra of the roughened surface of the copper alloy base material is less than 0.3 μm in all directions on the surface of the base material, it is very difficult to manufacture the electrically conductive material for a connection component according to the present invention. Specifically, it is very difficult to set an arithmetic mean roughness Ra of the material surface after the reflow treatment in at least one direction at 0.15 μm or more, to set a material-surface exposure area ratio of the Cu-Sn alloy coating layer at 3 to 75%. Concurrently, it is also difficult to set an average thickness of the reflow Sn coating layer at 0.2 to 5.0 μm. Meanwhile, if an arithmetic mean roughness Ra exceeds 4.0 μm in any direction, it is difficult to smooth the surface of the reflow Sn coating layer by molten Sn or Sn alloy flow. Therefore, the surface roughness of the base material is controlled to set the arithmetic mean roughness Ra in at least one direction at 0.3 μm or more and the arithmetic mean roughness Ra in all directions at 4.0 μm or less. By setting the surface of the base material at such surface roughness, along with the molten Sn or Sn alloy flow (smoothing of the reflow Sn coating layer), parts of the Cu-Sn alloy coating layer grown through the reflow treatment are exposed on the material surface. These parts of the Cu-Sn alloy coating layer are subsequently exposed on the material surface.

Regarding the surface roughness of the base material, more preferably, the arithmetic mean roughness Ra in at least one direction is 0.4 $\mu$m or more, and the arithmetic mean roughness Ra in all directions is 3.0 $\mu$m or less.

As mentioned above, in the Cu-Sn alloy coating layer exposed on the material surface after the reflow treatment, the average exposure interval in at least one direction (particularly, in the direction perpendicular to the rolling direction) is preferably 0.01 to 0.5 mm. The Cu-Sn alloy coating layer formed by the reflow treatment normally grows reflecting the form of the base material surface, and thus, the exposure interval of the Cu-Sn alloy coating layer at the material surface after the reflow treatment almost reflects the mean spacing Sm of irregularities of the base material surface. Therefore, the mean spacing Sm of irregularities of the base material surface, calculated in the above-mentioned one direction, is preferably 0.01 to 0.5 mm. 0.05 to 0.3 mm is more preferably. In this way, the exposed form of the Cu-Sn alloy coating layer, exposed on the material surface after the reflow treatment, can be controlled.

The conditions for the reflow treatment are set as follows: a temperature range from the melting temperature of the Sn plating layer to 600°C × a time range from 3 to 30 seconds. For Sn metal, if the heating temperature is lower than 230°C, the Sn plating layer is not melted. To obtain the Cu-Sn alloy coating layer in which the Cu content is not extremely low, the heating temperature is preferably 240°C or higher. Meanwhile, if the heating temperature exceeds 600°C, the copper alloy base material is softened to generate strain, and a Cu-Sn alloy coating layer in which the Cu content is extremely high is formed, and thus, it is impossible to maintain the contact resistance at a low level. If the heating time is less than 3 seconds, the heat transfer is not uniform, a Cu-Sn alloy coating layer with a sufficient thickness cannot be formed. If the heating time exceeds 30 seconds, the oxidation of the material surface proceeds, thereby the contact resistance increase and the resistance to a fretting wear also degrades.

By performing this reflow treatment, the Cu-Sn alloy coating layer is formed, and the reflow Sn coating layer is smoothed by flow of the molten Sn or the Sn alloy, thereby the Cu-Sn alloy coating layer having a thickness of 0.2 $\mu$m or more is exposed on the material surface. Further, grain size of Sn coating become coarse, a plating stress is reduced, and consequently no whisker occurs. In either case, to uniformly grow the Cu-Sn alloy layer, the heat treatment is preferably performed at a temperature to melt Sn or an Sn alloy and at 300°C or less, with as small heat as possible.

Examples

A copper alloy (brass) ingot with a thickness of 45 mm that consists of 30% by mass of Zn with the balance being Cu was subjected to soaking at 850°C for 3 hours and then hot-rolled into a sheet with a thickness of 15 mm. The sheet was subjected to quenching at a temperature of 600°C or higher, subsequently followed by cold rough rolling, recrystallization annealing and finish cold rolling. In the finish cold rolling, only one pass rolling was performed using the work roll with its surface roughened on the rolling conditions shown in Table 1, consequently, the copper alloy strip with a thickness of 0.25 mm was produced.

[Table 1]

| Table 1 Rolling conditions | | | | |
|---|---|---|---|---|
| Condition symbol | Roll diameter (mm) | Viscosity of lubricant (mPa·s) | Rolling rate (m/min) | Rolling reduction (%/ pass) |
| a | 100 | 40 | 30 | 35 |
| b | 100 | 90 | 30 | 35 |
| c | 100 | 180 | 100 | 35 |
| d | 40 | 180 | 100 | 35 |
| e | 40 | 40 | 30 | 35 |
| f | 100 | 40 | 30 | 20 |
| g | 100 | 180 | 100 | 20 |
| h | 40 | 180 | 100 | 20 |

The Vickers hardnesses (VT, VL) of the obtained copper alloy strip (copper alloy base material) were measured by the methods mentioned above to determine a difference in the Vickers hardness (VT-VL). In the Vickers hardness test, measurement sites were set at 30 sites of each of base materials A to H, and then the average of measured values at theses 30 sites was calculated. In this way, the Vickers hardness (VT, VL) was determined. The surface roughness of the base material was measured in the following way. These results are shown in Table 2.

[Measurement of Surface Roughness of Base Material]

The surface roughness was measured using a contact-type surface roughness measurement instrument (SURFCOM 1400, manufactured by TOKYO SEIMITSU Co., Ltd.) by a method in conformity with JIS B 0601-1994. The surface roughness measurement conditions were set as follows: a cut-off value of 0.8 mm; a reference length of 0.8 mm; an evaluation length of 4.0 mm; a measurement rate of 0.3 mm/s; and a stylus tip radius of 5 $\mu$mR. The measurement direction of the surface roughness was set at the direction perpendicular to the rolling direction (in the direction where the arithmetic mean roughness Ra becomes the largest).

[Table 2]

Table 2 Characteristics of copper alloy base material

| Base material symbol | Condition symbol | Difference in Vickers hardness (VT-VL) | Arithmetic mean roughness ($\mu$m) | Mean spacing of irregularities Sm (mm) |
|---|---|---|---|---|
| A | a | 15 | 0.67 | 0.07 |
| B | b | 12 | 0.65 | 0.07 |
| C | c | 9 | 0.63 | 0.07 |
| D | d | 3* | 0.66 | 0.06 |
| E | e | 10 | 0.67 | 0.06 |
| F | f | 12 | 0.61 | 0.08 |
| G | g | 5 | 0.60 | 0.08 |
| H | h | 2* | 0.57 | 0.09 |
| *Item that did not satisfy the requirement of the present invention | | | | |

Copper alloy base materials (A to H) shown in Table 2 were subjected to Ni plating, Cu plating and Sn plating with respective thicknesses, followed by the reflow treatment at 280°C for 10 seconds, thereby the test materials Nos. 1 to 8 shown in Table 3 are obtained.
With regard to each of the test materials Nos. 1 to 8 after the plating (before the reflow treatment), an average thickness of each of the Ni plating layer the Cu plating layer, and the Sn plating layer was measured as follows, like in Examples disclosed in Patent Documents 1 and 2. The results are shown in Fig. 3.

[Measurement of Average Thickness of Ni Plating Layer]

An average thickness of the Ni plating layer of each test material before the reflow treatment was calculated by using a fluorescent X-ray film thickness meter (SFT 3200, manufactured by SEIKO INSTRUMENTS INC.). As measurement conditions, a two-layer calibration curve of Sn/Ni/base material was used as a calibration curve, and a collimator diameter was set at $\phi$0.5 mm. The average thickness of the Ni plating layer hardly changes before and after the reflow treatment.

[Measurement of Average Thickness of Cu Plating Layer]

The cross-section of the test material before the reflow treatment, processed by a microtome method, was observed with the SEM (scanning electron microscope) at a magnification of 10,000 times. Then, the average thickness of the Cu plating layer was calculated by image analysis processing.

[Measurement of Average Thickness of Sn plating layer]

An average thickness of the Sn plating layer of each test material before the reflow treatment was calculated by using the fluorescent X-ray film thickness meter (SFT 3200, manufactured by SEIKO INSTRUMENTS Inc.). As measurement conditions, a single-layer calibration curve of Sn/base material or a two-layer calibration curve of Sn/Ni/base material was used as a calibration curve, and a collimator diameter was set at $\phi$0.5 mm.
Regarding the test materials Nos. 1 to 8 after the reflow treatment, the average thickness and the surface roughness of each of the Cu-Sn alloy coating layer and the reflow Sn coating layer were measured by the following way, like in Examples disclosed in Patent Documents 1 and 2. Regarding the Cu-Sn alloy coating layer, the Cu content, the surface exposure area ratio, the average surface exposure interval and the thickness of the Cu-Sn alloy coating layer exposed on the material surface were measured by the following way, like in Examples disclosed in Patent Documents 1 and 2. The results of the measurement mentioned above are shown likewise in Table 3. Table 3 describes, in the column of the average thickness of the Ni coating layer, an average thickness of the Ni plating layer of the test material after plating (before the reflow treatment) as it is.

[Measurement of Average Thickness of Cu-Sn Alloy Coating Layer]

First, the test material was immersed in an aqueous solution containing p-nitrophenol and caustic soda as components for 10 minutes to thereby remove the reflow Sn coating layer. Thereafter, a thickness of the Sn component contained in the Cu-Sn alloy coating layer was measured by using the fluorescent X-ray film thickness meter (SFT 3200, manufactured by SEIKO INSTRUMENTS INC.). As measurement conditions, a single-layer calibration curve of Sn/base material or a two-layer calibration curve of Sn/Ni/base material was used as a calibration curve, and a collimator diameter was set at $\phi$0.5 mm. The obtained value was defined and calculated as the average thickness of the Cu-Sn alloy coating layer.

[Measurement of Average Thickness of Reflow Sn Coating Layer]

First, the sum of a thickness of the reflow Sn coating layer of the test material and a thickness of the Sn component contained in the Cu-Sn alloy coating layer was measured by using the fluorescent X-ray film thickness meter (SFT 3200, manufactured by SEIKO INSTRUMENTS Inc.). Then, the test material was immersed in an aqueous solution containing p-nitrophenol and caustic soda as components for 10 minutes to thereby remove the reflow Sn coating layer. A thickness of the Sn component contained in the Cu-Sn alloy coating layer was measured again by using the fluorescent X-ray film thickness meter. As measurement conditions, a single-layer calibration curve of Sn/base material or a two-layer calibration curve of Sn/Ni/base material was used as a calibration curve, and a collimator diameter was set at $\phi$0.5 mm. The average thickness of the reflow Sn coating layer was calculated by subtracting the thickness of the Sn component contained in the Cu-Sn alloy coating layer from the sum of the obtained thickness of the reflow Sn coating layer and the obtained thickness of the Sn component contained in the Cu-Sn alloy coating layer.

[Measurement of Surface Roughness]

The surface roughness (arithmetic mean roughness Ra) was measured using a contact-type surface roughness measurement instrument (SURFCOM 1400, manufactured by TOKYO SEIMITSU Co., Ltd.) based on a method in conformity with JIS B 0601-1994. The surface roughness measurement conditions were set as follows: a cut-off value of 0.8 mm; a reference length of 0.8 mm; an evaluation length of 4.0 mm; a measurement rate of 0.3 mm/s; and a stylus tip radius of 5 $\mu$mR. The measurement direction of the surface roughness was set at the direction perpendicular to the rolling direction (in the direction where the surface roughness becomes the largest).

[Measurement of Cu Content in Cu-Sn Alloy Coating Layer]

First, the test material was immersed in an aqueous solution containing p-nitrophenol and caustic soda as components for 10 minutes to thereby remove the reflow Sn coating layer. Then, a Cu content in the Cu-Sn alloy coating layer was determined by quantitative analysis using the EDX (energy-dispersive X-ray spectroscopy).

[Surface Exposure Area Ratio of Cu-Sn Alloy Coating Layer]

The surface of the test material was observed using the SEM (scanning electron microscope) equipped with the EDX (energy-dispersive X-ray spectroscopy) at a magnification of 200 times. The obtained compositional image contrast (except for contrast due to stain, flaw, etc.,) was analyzed to thereby measure the surface exposure area ratio of the Cu-Sn alloy coating layer.

[Measurement of Average Surface Exposure Interval of Cu-Sn Alloy Coating Layer]

The surface of the test material was observed using the SEM (scanning electron microscope) equipped with the EDX (energy-dispersive X-ray spectroscopy) at a magnification of 200 times. Based on the obtained compositional image, a value obtained by adding an average width (length along the straight line) of the Cu-Sn alloy coating layer crossing the straight line drawn on the material surface in the direction perpendicular to the rolling direction to an average width of the reflow Sn coating layer and further the average of the value is calculated, thereby an average material-surface exposure interval of the Cu-Sn alloy coating layer is measured.

[Measurement of Thickness of Cu-Sn Alloy Coating Layer Exposed on Surface]

The cross-section of the test material, processed by the microtome method, was observed by the SEM (scanning electron microscope) at a magnification of 10,000 times. Then, the thickness of the Cu-Sn alloy coating layer exposed on the material surface was calculated by image analysis processing.

[Table 3]

Table 3 Characteristics of electrically conductive material

| No. | Base material symbol | Condition symbol | Average thickness of plating layer (μm) | | | Average thickness of surface coating layer (μm) | | | Material surface roughness Ra (μm) | Cu-Sn alloy coating layer | | | |
|---|---|---|---|---|---|---|---|---|---|---|---|---|---|
| | | | Ni plating layer | Cu plating layer | Sn plating layer | Ni coating layer | Cu-Sn alloy coating layer | Sn coating layer | | Cu content (at%) | Surface exposure area ratio (%) | Surface exposure interval (mm) | Thickness of exposed part (μm) |
| 1 | A | a | 0.3 | 0.15 | 0.6 | 0.3 | 0.35 | 0.3 | 0.36 | 60 | 40 | 0.10 | 0.35 |
| 2 | B | b | 0.3 | 0.15 | 0.6 | 0.3 | 0.35 | 0.3 | 0.36 | 60 | 37 | 0.09 | 0.35 |
| 3 | C | c | 0.3 | 0.15 | 0.6 | 0.3 | 0.35 | 0.3 | 0.37 | 60 | 38 | 0.11 | 0.30 |
| 4 | D | d | 0.3 | 0.15 | 0.6 | 0.3 | 0.35 | 0.3 | 0.36 | 60 | 40 | 0.08 | 0.35 |
| 5 | E | e | 0.3 | 0.15 | 0.6 | 0.3 | 0.35 | 0.3 | 0.36 | 60 | 40 | 0.08 | 0.35 |
| 6 | F | f | 0.4 | 0.2 | 0.7 | 0.4 | 0.5 | 0.4 | 0.30 | 55 | 28 | 0.11 | 0.40 |
| 7 | G | g | 0.4 | 0.2 | 0.7 | 0.4 | 0.5 | 0.4 | 0.28 | 55 | 27 | 0.10 | 0.40 |
| 8 | H | h | 0.4 | 0.2 | 0.7 | 0.4 | 0.5 | 0.4 | 0.27 | 55 | 26 | 0.12 | 0.40 |

Regarding the test materials Nos. 1 to 8 after the reflow treatment, an evaluation test for a coefficient of friction in each of the direction perpendicular to, the direction inclined by 45° to, and the direction parallel to the rolling direction of a copper alloy base material was performed in the following way. The results are shown in Table. 4. Table 4 also shows a difference in the Vickers hardness (VT - VL) of the copper alloy base material in each of the test materials Nos. 1 to 8.

[Evaluation Test for Coefficient of Friction]

A coefficient of friction was evaluated by imitating the shape of an indent part of an electric contact in the fitting type connection component and using a device shown in Fig. 2. First, a male test specimen 4 which is a plate material cut out from each of the test materials (Nos. 1 to 8) was fixed on a horizontal stand 5, and a female test specimen 6 which is a hemispherical processed material (with an outer diameter of $\phi$2.0 mm) cut out from the test material No. 8 was put on the male test specimen 4 to cause the coating layers of these test specimens to be in contact with each other. Subsequently, a load (weight 7) of 2.0 N was applied to the female test specimen 6 to press the male test specimen 4. By using a horizontal load measuring instrument (Model-2152, manufactured by AIKOH ENGINEERING Co., Ltd.), the male test specimen 4 was drawn horizontally (at a sliding rate of 80 mm/min), and the maximum friction force F (unit: N) was measured up to a sliding distance of 5 mm. The sliding direction of the male test specimen 4 was set at each of the direction perpendicular to, the direction inclined by 45° to, and the direction parallel to the rolling direction. The coefficient of friction was determined by formula (1) below. Reference numeral 8 denotes a load cell, and the arrow indicates the sliding direction.

$$\text{Coefficient of Friction} = F/2.0 \qquad (1)$$

[Table 4]

| Table 4 Friction coefficient of electrically conductive material | | | | | | |
|---|---|---|---|---|---|---|
| Test material No. | Base material symbol | Condition symbol | Base material Difference in Vickers hardness (VT-VL) | Coefficient of friction | | |
| | | | | Perpendicular to the rolling direction | Inclined by 45° to the rolling direction | Parallel to the rolling direction |
| 1 | A | a | 15 | 0.25 | 0.23 | 0.31 |
| 2 | B | b | 12 | 0.26 | 0.24 | 0.32 |
| 3 | C | c | 9 | 0.27 | 0.25 | 0.32 |
| 4 | D | d | 3* | 0.31 | 0.31 | 0.32 |
| 5 | E | e | 10 | 0.29 | 0.27 | 0.34 |
| 6 | F | f | 12 | 0.30 | 0.29 | 0.35 |
| 7 | G | g | 5 | 0.31 | 0.30 | 0.36 |
| 8 | H | h | 2* | 0.36 | 0.35 | 0.37 |
| *Item that did not satisfy the requirement of the present invention | | | | | | |

As shown in Tables 2 and 3, the test materials Nos. 1 to 8 satisfied the following requirements of the present invention: the surface roughness of the copper alloy base material; the average thickness and surface roughness of each coating layer; the Cu content in the Cu-Sn alloy coating layer; the surface exposure area ratio; the average surface exposure interval; and the thickness of the surface exposed part. The test specimens 1 to 3 and 5 to 7 satisfied the requirement of the present invention (VT - VL ≥ 4) regarding the difference in the Vickers hardness, whereas the test specimens 4 and 8 did not satisfy this requirement.

As a result, as shown in Table 4, in each of the test specimens Nos. 1 to 3 and 5 to 7, the coefficient of friction in the direction perpendicular to the rolling direction was lower than that in the direction parallel to the rolling direction by more than 0.04. Furthermore, the coefficient of friction in the direction inclined by 45° to the rolling direction was even lower than that in the direction perpendicular to the rolling direction.

Meanwhile, in each of the test specimens No. 4 and 8, the coefficient of friction in each of the direction perpendicular to and the direction inclined by 45° to the rolling direction did not greatly differ from that in the direction parallel to the rolling direction.

In each of the test materials Nos. 1 and 7 after the reflow treatment, the reflow Sn coating layer, the Cu-Sn alloy coating layer and the Ni coating layer were removed by etching, and then, Vickers hardnesses (VT, VL) of the copper alloy base material were measured in the way mentioned above to thereby determine the difference in the Vickers hardness (VT - VL). Both in the test materials Nos. 1 and 7, the difference in the Vickers hardness (VT - VL) of the copper alloy base material after the reflow treatment was the same as the difference in the Vickers hardness (VT - VL) of the copper alloy base material before the plating.

First Aspect

An electrically conductive material for a connection component includes: a base material made of a copper alloy sheet strip; a Cu-Sn alloy coating layer having a Cu content of 20 to 70 atomic percent and an average thickness of 0.2 to 3.0 $\mu$m; and a reflow Sn coating layer having an average thickness of 0.2 to 5.0 $\mu$m, wherein the Cu-Sn alloy coating layer and the reflow Sn coating layer are arranged on a surface of the base material in this order from a side of the base material; an arithmetic mean roughness Ra in at least one direction is 0.15 $\mu$m or more and an arithmetic mean roughness Ra in all directions is 3.0 $\mu$m or less; parts of the Cu-Sn alloy coating layer are formed to be exposed on a surface of the reflow Sn coating layer; a material-surface exposure area ratio of the Cu-Sn alloy coating layer is 3 to 75%; and an average material-surface exposure interval of the Cu-Sn alloy coating layer in at least one direction is 0.01 to 0.5 mm,

wherein when a Vickers hardness test is performed by orienting a plane which is a plane parallel to a direction of application of a testing force and which includes one of ridge lines of an indenter with a square pyramid shape, in parallel to a rolling direction of the base material, applying a testing force of 4.903 N onto the surface of the base material with the indenter and then holding for 10 seconds, the base material satisfies VT - VL $\geq$ 4, where VL is a Vickers hardness determined from a length of a diagonal parallel to the rolling direction of a dent left on the surface of the base material after releasing the testing force, and VT is a Vickers hardness determined from a length of a diagonal perpendicular to the rolling direction of the dent.

Second Aspect

The electrically conductive material for a connection component according to the first aspect, wherein a coefficient of friction in each of a direction inclined by 45° to and a direction perpendicular to the rolling direction is smaller than a coefficient of friction in a direction parallel to the rolling direction.

Third Aspect

The electrically conductive material for a connection component according to the first or second aspect, wherein a thickness of the Cu-Sn alloy coating layer exposed on the surface of the reflow Sn coating layer is 0.2 $\mu$m or more.

Fourth Aspect

The electrically conductive material for a connection component according to any one of the first to third aspects, further comprising a Cu coating layer between the surface of the base material and the Cu-Sn alloy coating layer.

Fifth Aspect

The electrically conductive material for a connection component according to any one of the first to third aspects, wherein an underlayer made of any one of a Ni coating layer, a Co coating layer and a Fe coating layer is further formed between the surface of the base material and the Cu-Sn alloy coating layer, and an average thickness of the underlayer is 0.1 to 3.0 $\mu$m.

Sixth Aspect

The electrically conductive material for a connection component according to any one of the first to third aspects, wherein an underlayer made of any two of a Ni coating layer, a Co coating layer and a Fe coating layer is formed between the surface of the base material and the Cu-Sn alloy coating layer, and an average total thickness of the underlayer is 0.1 to 3.0 $\mu$m.

# EP 3 276 048 A1

Seventh Aspect

The electrically conductive material for a connection component according to the fifth or sixth aspect, further comprising a Cu coating layer between the underlayer and the Cu-Sn alloy coating layer.

Eighth Aspect

The electrically conductive material for a connection component according to any one of the first or seventh aspects, wherein on the surface of the base material, an arithmetic mean roughness Ra in at least one direction is 0.3 $\mu$m or more and an arithmetic mean roughness Ra in all directions is 4.0 $\mu$m or less.

Ninth Aspect

The electrically conductive material for a connection component according to an eighth aspect, wherein on the surface of the base material, a mean spacing Sm of irregularities in at least one direction is 0.01 to 0.5 mm.
The application claims priority to Japanese Patent Application No. 2015-059759 filed on March 23, 2015, the disclosure of the application is incorporated herein by reference.

Description of Reference Numerals

1: Dent
2, 3: Diagonal of dent
4: Male test specimen
5: Stand
6: Female test specimen
7: Weight
8: Load cell

**Claims**

1. An electrically conductive material for a connection component, comprising: a base material made of a copper alloy sheet strip; a Cu-Sn alloy coating layer having a Cu content of 20 to 70 atomic percent and an average thickness of 0.2 to 3.0 $\mu$m; and a reflow Sn coating layer having an average thickness of 0.2 to 5.0 $\mu$m, wherein the Cu-Sn alloy coating layer and the reflow Sn coating layer are arranged on a surface of the base material in this order from a side of the base material; an arithmetic mean roughness Ra in at least one direction is 0.15 $\mu$m or more and an arithmetic mean roughness Ra in all directions is 3.0 $\mu$m or less; parts of the Cu-Sn alloy coating layer are formed to be exposed on a surface of the reflow Sn coating layer; a material-surface exposure area ratio of the Cu-Sn alloy coating layer is 3 to 75%; and an average material-surface exposure interval in at least one direction is 0.01 to 0.5 mm, wherein when a Vickers hardness test is performed by orienting a plane which is a plane parallel to a direction of application of a testing force and which includes one of ridge lines of an indenter with a square pyramid shape, in parallel to a rolling direction of the base material, applying a testing force of 4.903 N onto the surface of the base material with the indenter and then holding for 10 seconds, the base material satisfies VT - VL $\geq$ 4, where VL is a Vickers hardness determined from a length of a diagonal parallel to the rolling direction of a dent left on the surface of the base material after releasing the testing force, and VT is a Vickers hardness determined from a length of a diagonal perpendicular to the rolling direction of the dent,
wherein a coefficient of friction in each of a direction inclined by 45° to and a direction perpendicular to the rolling direction is smaller than a coefficient of friction in a direction parallel to the rolling direction, and
wherein a thickness of the Cu-Sn alloy coating layer exposed on the surface of the reflow Sn coating layer is 0.2 $\mu$m or more.

2. The electrically conductive material for a connection component according to claim 1, further comprising a Cu coating layer between the surface of the base material and the Cu-Sn alloy coating layer.

3. The electrically conductive material for a connection component according to claim 1 or 2, wherein an underlayer made of any one or two of a Ni coating layer, a Co coating layer and a Fe coating layer is further formed between the surface of the base material and the Cu-Sn alloy coating layer, and an average thickness of the underlayer is 0.1 to 3.0 μm.

4. The electrically conductive material for a connection component according to claim 3, further comprising a Cu coating layer between the underlayer and the Cu-Sn alloy coating layer.

5. The electrically conductive material for a connection component according to claim 1 or 2, wherein on the surface of the base material, an arithmetic mean roughness Ra in at least one direction is 0.3 μm or more and an arithmetic mean roughness Ra in all directions is 4.0 μm or less.

6. The electrically conductive material for a connection component according to claim 3, wherein on the surface of the base material, an arithmetic mean roughness Ra in at least one direction is 0.3 μm or more and an arithmetic mean roughness Ra in all directions is 4.0 μm or less.

7. The electrically conductive material for a connection component according to claim 4, wherein on the surface of the base material, an arithmetic mean roughness Ra in at least one direction is 0.3 μm or more and an arithmetic mean roughness Ra in all directions is 4.0 μm or less.

8. The electrically conductive material for a connection component according to claim 5, wherein on the surface of the base material, a mean spacing Sm of irregularities in at least one direction is 0.01 to 0.5 mm.

9. The electrically conductive material for a connection component according to claim 6, wherein on the surface of the base material, a mean spacing Sm of irregularities in at least one direction is 0.01 to 0.5 mm.

10. The electrically conductive material for a connection component according to claim 7, wherein on the surface of the base material, a mean spacing Sm of irregularities in at least one direction is 0.01 to 0.5 mm.

## Fig.1

ROLLING DIRECTION

DL

DT

## Fig.2

## INTERNATIONAL SEARCH REPORT

| International application No. |
| --- |
| PCT/JP2016/057091 |

**A. CLASSIFICATION OF SUBJECT MATTER**
*C25D7/00*(2006.01)i, *C25D5/12*(2006.01)i, *C25D5/50*(2006.01)i, *H01R13/03*(2006.01)i

According to International Patent Classification (IPC) or to both national classification and IPC

**B. FIELDS SEARCHED**

Minimum documentation searched (classification system followed by classification symbols)
C25D7/00, C25D5/12, C25D5/50, H01R13/03

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-209680 A  (Kobe Steel, Ltd.), 10 October 2013 (10.10.2013), entire text & US 2013/0260174 A1    & EP 2644750 A1 & KR 10-2013-0111440 A   & CN 103367961 A | 1-10 |
| A | JP 2006-183068 A  (Kobe Steel, Ltd.), 13 July 2006 (13.07.2006), entire text & US 2008/0090096 A1    & WO 2006/028189 A1 & EP 1788585 A1         & KR 10-2007-0041621 A | 1-10 |
| A | JP 2012-167310 A  (Kobe Steel, Ltd.), 06 September 2012 (06.09.2012), entire text (Family: none) | 1-10 |

☒  Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 May 2016 (30.05.16) | 07 June 2016 (07.06.16) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**INTERNATIONAL SEARCH REPORT**

International application No.

PCT/JP2016/057091

C (Continuation). DOCUMENTS CONSIDERED TO BE RELEVANT

| Category* | Citation of document, with indication, where appropriate, of the relevant passages | Relevant to claim No. |
|---|---|---|
| A | JP 2014-62322 A (Kobe Steel, Ltd.), 10 April 2014 (10.04.2014), entire text & US 2014/0065440 A1 & EP 2703524 A2 & CN 103660426 A & KR 10-2014-0029257 A | 1-10 |
| A | JP 2006-283060 A (Dowa Mining Co., Ltd.), 19 October 2006 (19.10.2006), entire text (Family: none) | 1-10 |
| A | WO 2009/099198 A1 (The Furukawa Electric Co., Ltd.), 13 August 2009 (13.08.2009), entire text & JP 4974193 B & US 2010/0316879 A1 & EP 2243847 A1 & CN 101939453 A | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006183068 A
- JP 2013209680 A
- JP 2010075988 A
- JP 2015059759 A